# DEMANDE DE BREVET EUROPEEN

(11) **EP 4 660 410 A1**
(43) Date de publication de la demande: **10.12.2025**
(21) Numéro de dépôt: 25181149.3
(22) Date de dépôt: 05.06.2025
(51) Int. Cl.: E06B 9/17, E06B 9/42, H02S 40/38

(54) **ENSEMBLE D'ALIMENTATION POUR DISPOSITIF OCCULTANT ET DISPOSITIF OCCULTANT COMPRENANT UN TEL ENSEMBLE**

(30) Priorité: 06.06.2024 FR 2405981
(71) Demandeur: Profalux Industrie, 74300 Thyez (FR)
(72) Inventeur: Abrand, Jonathan, 74300 THYEZ (FR); Rouby, Quentin, 74300 THYEZ (FR); Vandeputte, Rémi, 74300 THYEZ (FR)
(74) Mandataire: Cabinet Beau de Loménie

(57) **Abrégé**

Ensemble d'alimentation (100) d'un dispositif occultant (1) comprenant une batterie (4) destinée à être reliée à un panneau photovoltaïque (3), un caisson (2) définissant un volume interne (V) et comprenant une paroi avant (6) munie d'une ouverture (10) intégrant des bords longitudinaux (11, 12), reliés entre eux par un premier bord latéral (13) et un deuxième bord latéral (14), l'ensemble d'alimentation comprenant des pièces de support (8, 9), toutes deux destinées à être solidarisées à la paroi avant (6), en étant respectivement insérées puis positionnées par coulissement contre le premier bord latéral et le deuxième bord latéral, les pièces de support incluant chacune un logement (15, 16) apte à permettre le maintien de la batterie, lorsque les pièces de support sont solidarisées à la paroi avant, les logements (15, 16) s'étendent tous deux au sein du volume interne (V).

## Description

L'invention a trait au domaine technique des dispositifs occultants à enroulement motorisé pour une baie, et en particulier des dispositifs occultants comprenant une batterie, par exemple alimentée par le biais d'un panneau photovoltaïque.

L'expression « élément occultant » fait référence à tout dispositif à enroulement, apte à s'étendre devant une baie de sorte à venir assurer une protection contre la lumière. Ainsi, un tel élément occultant inclut par exemple un volet, un store, un rideau souple, ou un brise-soleil orientable.

Dans toute la suite du présent texte, les termes « dispositif occultant », « dispositif occultant motorisé », ou « dispositif occultant à enroulement motorisé » font tous indistinctement références à un dispositif occultant à enroulement motorisé comprenant une batterie alimentée par le biais d'un panneau photovoltaïque.

Plus spécifiquement, l'invention se rapporte à un ensemble d'alimentation, également désigné dans toute la suite du texte par « ensemble ».

Il est connu d'utiliser des dispositifs occultants présentant une alimentation autonome alimentée par une cellule photovoltaïque. Une telle solution permet l'actionnement de l'élément occultant sans nécessiter de connexion au réseau électrique conventionnel. Aussi, l'absence de câblage requis simplifie l'installation et l'intégration du dispositif occultant sur le support. Une telle caractéristique permet une installation facile, quelle que soit la localisation choisie par l'utilisateur, sans qu'il ne soit contraint par le réseau électrique existant.

En outre, une telle technique utilise l'énergie solaire, laquelle est renouvelable, permettant à l'utilisateur de limiter sa consommation électrique.

Par ailleurs, le couplage de la cellule photovoltaïque avec une batterie permet de stocker l'énergie produite, offrant ainsi une autonomie accrue au dispositif occultant. Une telle capacité de stockage permet au dispositif occultant de fonctionner même en l'absence de lumière directe du soleil, offrant une fiabilité continue indépendamment des conditions météorologiques ou de l'heure de la journée.

En règle générale, les dispositifs occultants comprennent une partie mécanique, comprenant un caisson et l'élément occultant. Typiquement, l'élément occultant s'enroule et se déroule sur un axe longitudinal, pivotant par rapport au caisson, et une partie actionnante permettant la mise en mouvement de l'élément occultant.

De manière connue, la partie actionnante inclut un motoréducteur, une batterie reliée au motoréducteur, et à un panneau photovoltaïque.

Typiquement, la partie actionnante, notamment la cellule photovoltaïque est rapportée sur une paroi avant, en façade du caisson. De la sorte, la cellule photovoltaïque est positionnée de manière à recevoir le plus de rayonnement solaire possible. Le document FR 2842860 A1 illustre une telle configuration.

Grâce à un tel montage, l'accès à la batterie est aisé, permettant son remplacement rapide. Cependant, la partie actionnante, en saillie, rend le volet peu esthétique. Il est recherché un montage permettant d'avoir une façade avant la plus plane possible, et rendant la partie actionnante la moins visible possible.

Le document FR 3113088A1 décrit une structure de volet roulant munie d'un coffre à l'intérieur duquel est installé un arbre d'enroulement avec l'élément occultant. Un bloc d'alimentation autonome comportant un panneau photovoltaïque et une batterie sont positionnés sur la paroi avant, la paroi avant étant munie d'une ouverture pour installer le bloc en traversant ladite ouverture. Plus spécifiquement, il est prévu une plaque de fixation destinée à venir solidariser le bloc d'alimentation sur l'ouverture par enclipsage, le bloc d'alimentation présentant d'un côté une glissière destinée à recevoir le panneau photovoltaïque, et de l'autre côté des attaches en C destinées à l'engagement de la batterie.

Ainsi, le montage de la structure de volet s'effectue en venant engager la batterie sur la plaque de fixation et en insérant le panneau photovoltaïque sur la glissière, de sorte à assembler le bloc d'alimentation. Puis, le bloc d'alimentation est positionné par un bord supérieur au sein d'un épaulement jusqu'à enclipsage d'une tranche inférieure sur l'ouverture, à l'aide d'une languette d'arrêt flexible. Ainsi, l'aspect esthétique du dispositif occultant est soigné, et son encombrement limité.

Cependant, la maintenance d'un tel dispositif occultant est perfectible. En effet, l'accès à la batterie nécessite un démontage complet de la paroi avant, afin de pouvoir retirer le bloc d'alimentation, et ensuite procéder au retrait de la batterie. Le démontage de la partie avant est fastidieux, car il nécessite la manipulation en hauteur de la paroi munie du bloc d'alimentation autonome, un tel ensemble de pièces étant lourd et encombrant. Aussi, la maintenance de la batterie peut générer des troubles musculo-squelettiques (TMS) chez les professionnels réalisant fréquemment des interventions. En outre, le temps d'intervention pour un simple changement de batterie est long, et n'est pas à la portée de tout utilisateur final.

L'invention se propose de répondre aux inconvénients précités.

Un premier objet est de proposer un ensemble d'alimentation permettant de faciliter l'accès à la batterie du dispositif occultant, en évitant le démontage du caisson et de la paroi avant.

Un deuxième objet est de proposer un tel ensemble d'alimentation facilement démontable du caisson du dispositif occultant, en réduisant l'usage d'outils.

Un troisième objet est de proposer un tel ensemble d'alimentation pouvant être fabriqué en grande série, et en limitant les coûts.

Un quatrième objet est de proposer un dispositif occultant muni d'un ensemble d'alimentation tel que présenté ci-dessus.

À ce titre, il est prévu en premier lieu, un ensemble d'alimentation d'un dispositif occultant à enroulement motorisé pour baie, l'ensemble d'alimentation comprenant une batterie destinée à être connectée à un panneau photovoltaïque, un caisson définissant un volume interne, le caisson comprenant une paroi avant munie d'une ouverture destinée à être recouverte d'un panneau photovoltaïque, l'ouverture intégrant des bords longitudinaux, reliés entre eux par un premier bord latéral et un deuxième bord latéral, l'ensemble d'alimentation comprenant une première pièce de support et une deuxième pièce de support, toutes deux destinées à être solidarisées à la paroi avant, en étant respectivement insérées puis positionnées par coulissement contre le premier bord latéral et le deuxième bord latéral, les pièces de support incluant chacune un logement apte à permettre le maintien de la batterie, lorsque les pièces de support sont solidarisées à la paroi avant, les logements s'étendent tous deux au sein du volume interne.

Les caractéristiques suivantes supplémentaires peuvent être prévues seules ou en combinaison :
- une pièce de support est dotée d'un premier côté comprenant une première languette, et d'un deuxième côté comprenant une deuxième languette ainsi qu'une troisième languette, la première languette intégrant un premier plan de contact longitudinal, la deuxième languette intégrant un deuxième plan de contact longitudinal, la troisième languette intégrant un troisième plan de contact coplanaire du premier plan de contact, le deuxième plan de contact et le troisième plan de contact étant transversalement décalés l'un par rapport à l'autre, lorsque la pièce de support est solidarisée à la paroi avant, la paroi avant s'intercalant entre le deuxième plan de contact et le troisième plan de contact ;
- la première languette comprend une première surface de liaison et la troisième languette comprend une deuxième surface de liaison, les surfaces de liaison étant coplanaires et s'étendant selon un plan longitudinal, les surfaces de liaison formant un plan d'appui longitudinal permettant de recevoir le panneau photovoltaïque ;
- la batterie comprend une surface d'introduction cylindrique, la première pièce comprenant un premier logement, la deuxième pièce comprenant un deuxième logement, les logements comprenant chacun une aile définissant une portion de cylindre, lorsque la première pièce et la deuxième pièce sont solidarisées à la paroi avant, les ailes sont alignées selon une direction longitudinale ;
- une aile comprend une première rive, et une deuxième rive, l'aile étant suffisamment déformable de sorte à assurer une variation d'écartement entre la première rive et la deuxième rive, en réaction à une poussée exercée lors de l'introduction de la batterie au sein de la surface d'introduction, permettant l'enclipsage de la batterie sur la pièce de support ;
- une pièce de support comprend une zone d'arrêt, la zone d'arrêt englobant une surface de guidage comprise dans un plan longitudinal, une première surface de positionnement, une deuxième surface de positionnement, les surfaces de positionnement s'étendent toutes deux selon un plan longitudinal, la première surface de positionnement étant décalée transversalement par rapport à la deuxième surface de positionnement, le décalage transversal étant de dimension voisine à l'épaisseur de la paroi avant, un bord latéral incluant une face d'appui, et une encoche configurée pour recevoir la deuxième surface de positionnement ;
- un logement est doté d'une paroi d'arrêt de sorte à constituer un arrêt en translation pour la batterie ;
- l'ensemble d'alimentation comprend une connectique destinée à relier la batterie à un motoréducteur et à un panneau photovoltaïque, la paroi d'arrêt comprenant au moins une fente destinée à recevoir une connectique, celle-ci formant un moyen de coincement pour la connectique ;
- lorsque les pièces de support sont solidarisées à la paroi avant, les logements sont en regard de l'ouverture ;
- lorsque les pièces de support sont solidarisées à la paroi avant, les logements présentent un décalage vertical par rapport à l'ouverture ;
- le panneau photovoltaïque comprend un trou de positionnement, la paroi avant intègre une perforation de positionnement, et une pièce de support comprend un orifice de positionnement, lorsque la pièce de support est solidarisée à la paroi avant et le panneau photovoltaïque fixé sur la paroi avant, un même moyen de fixation mécanique traverse successivement le trou de positionnement, la perforation de positionnement, et l'orifice de positionnement.

En deuxième lieu, il est prévu un dispositif occultant à enroulement motorisé pour baie, le dispositif occultant comprenant un élément occultant, un motoréducteur, un système de commande, et un ensemble d'alimentation tel que présenté ci-dessus.

D'autres caractéristiques et avantages de l'invention apparaîtront plus clairement, et de manière concrète à la lecture de la description ci-après de modes de réalisation, donnée à titre d'exemple non limitatif, et faite en référence aux dessins annexés, dans lesquels :
[Fig.1] La figure 1 est une vue schématique en perspective d'un exemple de dispositif occultant ;
[Fig. 2] La figure 2 est une vue schématique en perspective illustrant partiellement un ensemble d'alimentation selon un premier mode de réalisation, l'ensemble d'alimentation étant en agencement de fonctionnement ;
[Fig. 3] La figure 3 est une vue schématique en perspective illustrant partiellement un ensemble d'alimentation selon un premier mode de réalisation, l'ensemble d'alimentation étant en agencement de maintenance, cet ensemble étant représenté sans panneau photovoltaïque ;
[Fig. 4] La figure 4 est une vue schématique en perspective illustrant partiellement un ensemble d'alimentation selon un premier mode de réalisation, l'ensemble d'alimentation étant en agencement de montage, l'ensemble d'alimentation étant représenté sans panneau photovoltaïque ;
[Fig. 5] La figure 5 est une vue schématique en coupe du dispositif de fixation selon le plan de coupe V-V de la figure 2, muni d'un panneau photovoltaïque ;
[Fig. 6] La figure 6 est une vue schématique en perspective d'une première pièce de support d'un ensemble d'alimentation selon le premier mode de réalisation ;
[Fig. 7] La figure 7 est une vue schématique en perspective d'une deuxième pièce de support d'un ensemble d'alimentation selon le premier mode de réalisation ;
[Fig. 8] La figure 8 est une vue schématique en perspective d'une première pièce de support d'un ensemble d'alimentation selon le premier mode de réalisation muni d'une batterie ;
[Fig. 9] La figure 9 est une vue schématique en perspective d'une deuxième pièce de support d'un ensemble d'alimentation selon le premier mode de réalisation muni d'une batterie ;
[Fig. 10] La figure 10 est une vue schématique en perspective illustrant partiellement un dispositif occultant intégrant un ensemble d'alimentation selon un deuxième mode de réalisation, l'ensemble d'alimentation étant en agencement de fonctionnement, l'ensemble d'alimentation étant représenté sans panneau photovoltaïque ;
[Fig. 11] La figure 11 est une vue schématique en perspective illustrant partiellement un ensemble d'alimentation selon un deuxième mode de réalisation, l'ensemble d'alimentation étant en agencement de maintenance, l'ensemble d'alimentation étant représenté sans panneau photovoltaïque ;
[Fig. 12] La figure 12 est une vue schématique en perspective d'un dispositif occultant comprenant un ensemble d'alimentation selon un deuxième mode de réalisation, l'ensemble d'alimentation étant représenté en agencement de montage, l'ensemble d'alimentation étant représenté sans panneau photovoltaïque ;
[Fig. 13] La figure 13 est une vue schématique en coupe selon le plan XIII-XIII de la figure 10 d'un ensemble d'alimentation selon un deuxième mode de réalisation, l'ensemble d'alimentation étant représenté sans panneau photovoltaïque ;
[Fig. 14] La figure 14 est une vue schématique en perspective d'une première pièce de support d'un ensemble d'alimentation selon le deuxième mode de réalisation ;
[Fig. 15] La figure 15 est une vue schématique en perspective d'une deuxième pièce de support d'un ensemble d'alimentation selon le deuxième mode de réalisation ;

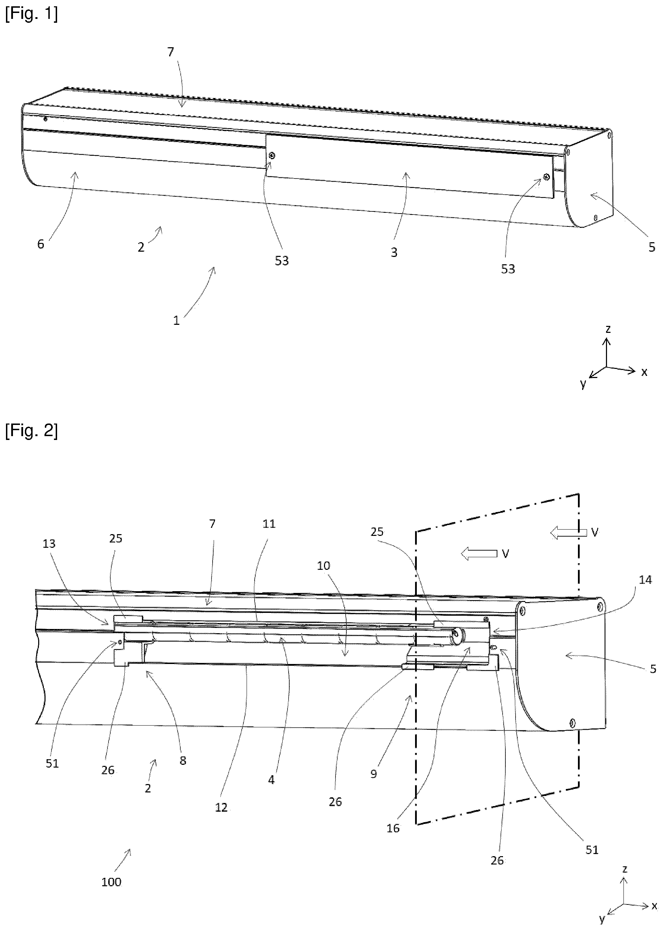

L'on se rapporte à la figure 1, le dispositif occultant 1 étant représenté monté, celui-ci permet l'usage normal par l'utilisateur final.

Typiquement, le dispositif occultant 1 est destiné à être utilisé pour une baie (non représentée sur les figures), c'est-à-dire une ouverture pratiquée dans une façade, un toit. En général, une telle ouverture est munie d'une plaque translucide ou transparente, en verre ou en thermoplastique.

Dans les figures, le dispositif occultant 1 est un volet roulant (non visible sur les figures). Un volet est en général composé de lames horizontales en métal ou en plastique articulées entre elles, de manière à pouvoir s'enrouler autour d'un axe (non visible sur les figures) actionné en rotation par le motoréducteur (non représenté).

Dans d'autres modes de réalisation non représentés, l'élément occultant est une toile souple destinée à atténuer le rayonnement lumineux irradiant une baie. La toile est généralement réalisée en tissus, mais peut être également réalisée sous la forme d'un maillage fin en polymère, de sorte à constituer une moustiquaire. La toile est destinée à s'enrouler autour d'un axe actionné en rotation par le motoréducteur.

Dans d'autres modes de réalisation non représentés, l'élément occultant comprend une pluralité de lames horizontales reliées entre elles par un système de transmission, en général des fils, ou chaînettes, de sorte à pouvoir être pivotées et ainsi régler de manière synchrone l'angle des lames, afin de pouvoir contrôler la quantité de lumière pénétrant la baie.

Comme il peut être observé sur la figure 1, le dispositif occultant 1 comprend un caisson 2 sur lequel est fixé un panneau photovoltaïque 3. Un tel panneau photovoltaïque 3 permet de convertir l'énergie lumineuse reçue en énergie électrique, laquelle est transmise au motoréducteur par l'intermédiaire d'une batterie 4.

Avantageusement, le panneau photovoltaïque 3 est directement fixé sur le caisson 2, mais dans d'autres modes de réalisation non représentés, une ou plusieurs autres pièces d'interface planes sont intercalées entre le panneau photovoltaïque 3 et le caisson 2.

Dans les modes de réalisation décrits, le motoréducteur, le panneau photovoltaïque 3, et la batterie 4 sont reliés par une connectique (non visible sur les figures), comprenant des câbles, ou des nappes de câbles, ou des faisceaux de câbles.

Sans que cela soit représenté sur les figures, le motoréducteur, le panneau photovoltaïque 3, et la batterie 4 sont commandés par un système de contrôle, permettant notamment de gérer l'interface entre les actions de l'utilisateur, la gestion de la charge de la batterie, et la commande du motoréducteur.

Tel que représenté sur les figures, le caisson 2 comprend avantageusement deux parois latérales 5, une paroi avant 6 et une paroi supérieure 7, formant un boîtier, définissant un volume interne V. Un tel volume interne V permet notamment de loger l'élément occultant, la batterie 4, et le motoréducteur.

Dans le premier mode de réalisation représenté, la paroi supérieure est en deux parties, réunies en une zone d'intersection I, à l'aide d'une ou plusieurs pièces dédiées, non objets du présent texte.

Dans le deuxième mode de réalisation représenté, la paroi supérieure 7 définit une forme de L et est monobloc.

Dans toute la suite du présent texte, l'on définit par rapport au caisson 2 un repère orthogonal XYZ comprenant trois axes perpendiculaires deux à deux, à savoir :
- un axe X, confondu avec la direction générale d'extension du caisson 2, définissant une direction longitudinale ;
- un axe Y, définissant une direction transversale, horizontale, qui avec l'axe X définit un plan XY horizontal ;
- un axe Z, définissant une direction verticale, perpendiculaire au plan XY horizontal, les axes YZ définissant un plan transversal, les axes XZ définissant un plan vertical.

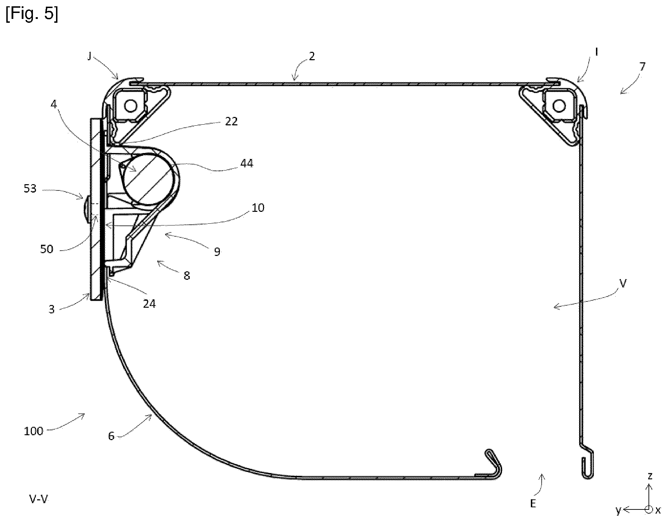

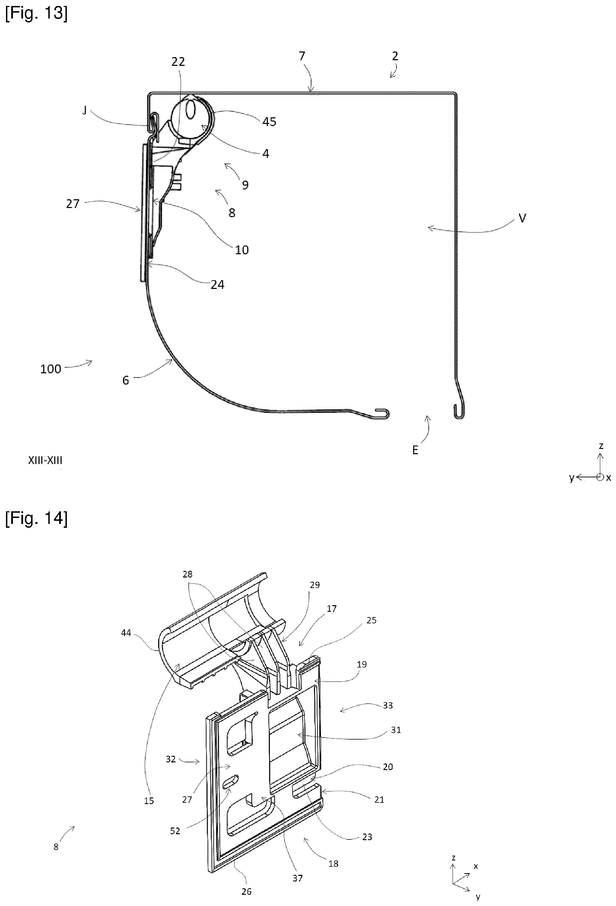

La paroi avant 6 et la paroi supérieure 7 sont avantageusement assemblées l'une dans l'autre sur une zone de jonction J, longitudinale, comme visible sur les figures 5 et 13.

Lorsqu'elles sont assemblées, la paroi avant 6 et la paroi supérieure 7 définissent un espacement de passage E, à l'opposé de la ligne de jonction J, permettant le passage de l'élément occultant.

Le panneau photovoltaïque 3 prend par exemple la forme d'une plaque munie d'un côté de cellules photovoltaïques (non représentées sur les figures), et d'un autre côté d'une face de fixation (non visible sur les figures).

Tel qu'il peut être observé sur les figures, la paroi avant 6 intègre une ouverture 10, s'étendant sensiblement longitudinalement. L'ouverture 10 intègre de manière avantageuse un premier bord longitudinal 11 et un deuxième bord longitudinal 12, qui sont reliés entre eux par un premier bord latéral 13 ainsi qu'un deuxième bord latéral 14.

Le panneau photovoltaïque 3 est fixé à la paroi avant 6, avantageusement au droit de l'ouverture 10, en occupant un minimum d'espace, et en minimisant son affleurement. Une telle caractéristique permet de soigner l'esthétique du dispositif occultant 1.

Le caisson 2 est généralement fixé sur la partie supérieure ou juste au-dessus de la baie, par l'intermédiaire d'une paroi arrière (non visible sur les figures), la levée ou descente de l'élément occultant permettant de régler l'obturation de la baie.

Comme il peut être constaté sur la figure 1, hormis le panneau photovoltaïque 3 en lui-même, les composants formant le dispositif occultant 1 sont tous disposés dans le caisson 2. De la sorte, l'aspect esthétique du dispositif occultant 1 est préservé, et son encombrement limité.

Sur les figures 2 à 5 et 10 à 13, est représenté un ensemble d'alimentation 100 du dispositif occultant 1.

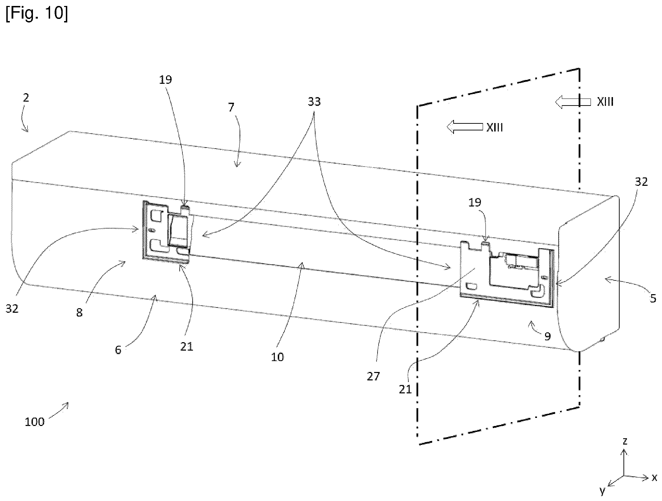

Sur les figures 2 et 10, l'ensemble d'alimentation 100 est représenté monté, c'est-à-dire, que l'ensemble d'alimentation 100 est un agencement d'utilisation, correspondant à l'agencement qu'il possède lorsque le dispositif occultant 1 est en usage.

L'ensemble d'alimentation 100 est représenté démonté, autrement dit dans un agencement de maintenance. Dans un tel agencement, la batterie 4 est accessible. De la sorte, la batterie 4 peut être vérifiée, et si nécessaire, remplacée.

Comme il peut être observé, l'ensemble 100 comprend une batterie 4, un panneau photovoltaïque 3, le caisson 2, une première pièce de support 8, et une deuxième pièce de support 9.

Les pièces de support 8, 9 sont avantageusement réalisées dans un matériau qui offre une rigidité suffisante pour pouvoir soutenir le poids d'une batterie 4 et d'un panneau photovoltaïque, tout en étant déformable élastiquement par une action manuelle de l'utilisateur.

De manière à permettre d'avoir des pièces de support 8, 9 légères, il est prévu l'utilisation d'un matériau thermoplastique, lequel peut permettre une fabrication à faible coût, par exemple par moulage sous injection. En outre, un tel matériau est léger.

Dans les modes de réalisation représentés, en se mettant face à la paroi avant 6, la première pièce de support 8 est disposée sur la partie gauche de l'ouverture 10, et la deuxième pièce de support 9 est disposée sur la partie droite de l'ouverture 10.

Dans d'autres modes de réalisation, en se positionnant face à l'ouverture, à l'extérieur du caisson, la première pièce de support 8 est disposée sur la partie gauche de l'ouverture 10, et la deuxième pièce de support 9 est disposée sur la partie droite de l'ouverture 10. Grâce à l'ouverture 10, l'utilisateur accède de manière aisée au volume interne V, et par conséquent aux pièces de support 8, 9 et à la batterie 4.

Plus spécifiquement, les pièces de support 8 9 peuvent être dans plusieurs configurations possibles.

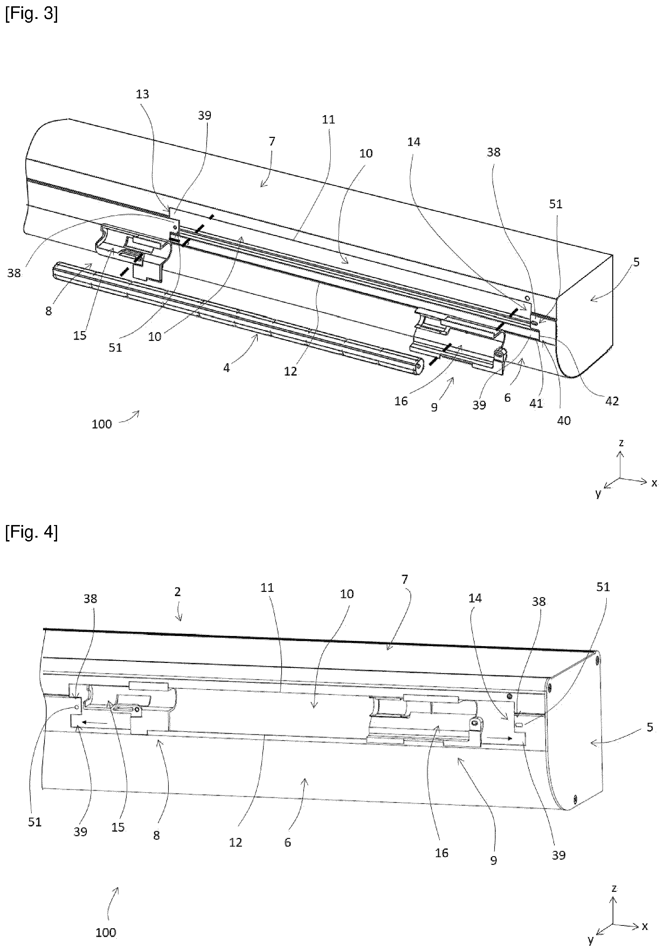

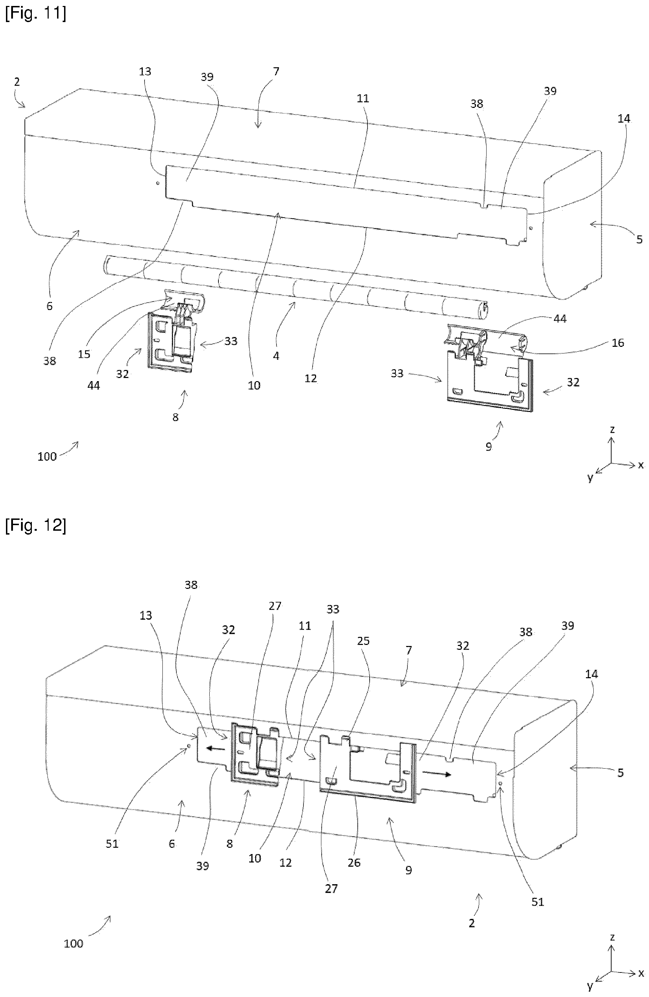

Dans une configuration démontée, représentée par exemple figure 3 ou figure 11, les pièces de support 8, 9 ne sont pas au contact de la paroi avant 6. Une telle configuration est rencontrée lorsque l'ensemble 100 est en agencement de maintenance.

Dans un agencement de montage, représenté par exemple figures 4 et 12, l'ensemble d'alimentation 100, les pièces de support 8, 9 sont positionnées en liaison glissante au sein de l'ouverture 10, permettant à l'utilisateur de les faire coulisser le long de l'ouverture 10.

Dans une configuration de solidarisation, représentée par exemple sur les figures 2 et 10, les pièces de support 8, 9 sont respectivement solidarisées contre le premier bord longitudinal 11 et le deuxième bord longitudinal 12. Dans une telle configuration, les pièces de support 8, 9 sont solidarisées à la paroi avant 6, et immobilisées par rapport au caisson 2.

Dans les modes de réalisation représentés, les pièces de support 8, 9 comprennent chacune un premier côté 17 et un deuxième côté 18, opposés l'un à l'autre, en contact respectif avec le premier bord longitudinal 11 et le deuxième bord longitudinal 12.

Avantageusement, un premier côté 17 comprend une première languette 19, le deuxième côté 18 comprend une deuxième languette 20, ainsi qu'une troisième languette 21.

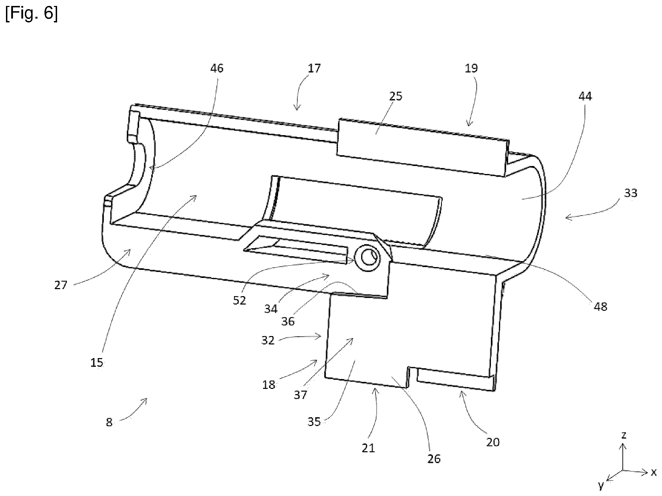

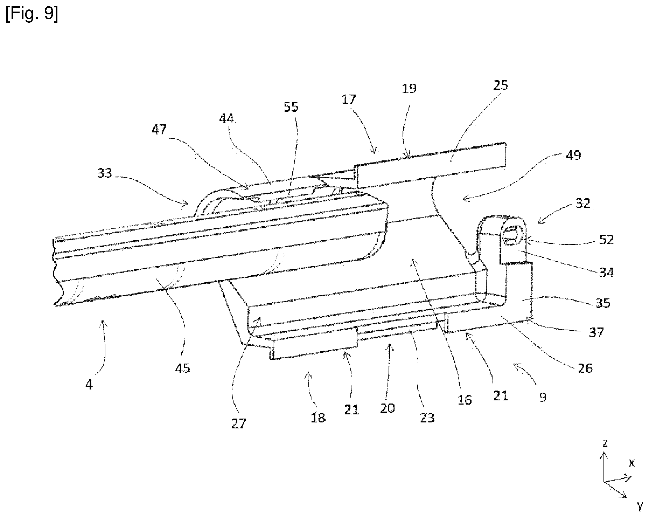

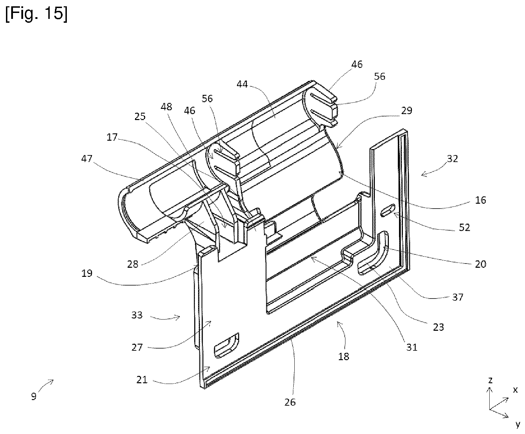

Avantageusement, la première languette 19 comprend un premier plan de contact 22, longitudinal, la deuxième languette 20 inclut un deuxième plan de contact 23, longitudinal, la troisième languette 21 inclut un troisième plan de contact 24, longitudinal. Le premier plan de contact 22 et le troisième plan de contact 24 sont visibles sur les figures 5 et 13, tandis que le deuxième plan de contact est notamment visible sur les figures 6 à 9, 14 et 15.

Tel qu'il peut être observé sur les figures 6 à 8, 14 et 15, le premier plan de contact 22 et le troisième plan de contact 23 sont coplanaires, le premier plan de contact 22 étant décalé transversalement par rapport au deuxième plan de contact 23. De la sorte, il est formé un espace transversal entre le premier plan de contact 22, et le deuxième plan de contact 23, ledit espace transversal étant au moins aussi important que l'épaisseur de la paroi avant 6.

Comme il peut être observé, la paroi avant 6 est placée entre d'une part le premier plan de contact 22 et le troisième plan de contact 24, et d'autre part le deuxième plan de contact 23. Dans une telle configuration, la deuxième languette 20 s'étend au sein du volume interne V, tandis que la première languette 19 et la troisième languette 23 s'étendent à l'extérieur du caisson 2.

Une telle disposition permet l'insertion d'une pièce de support 8, 9 par enclipsage sur l'ouverture 6, et donc sur la paroi avant 6, comme détaillé plus loin dans le présent texte. Il est ainsi créé une liaison glissière entre une pièce de support 8, 9 et la paroi avant 6. Les supports 8, 9 peuvent être mis en position sur la paroi avant 6 sans nécessiter l'utilisation d'outil.

En outre, grâce au décalage transversal entre d'une part, la première languette 19 et la troisième languette 21, et d'autre part, la deuxième languette 20, il est permis après enclipsage ou encliquetage d'une pièce de support 8, 9 sur l'ouverture, de faire coulisser ladite pièce de support 8, 9 le long de l'ouverture 10. De la sorte, il est possible par simple glissement de faire varier la distance entre la première pièce de support 8 et la deuxième pièce de support 9. Une telle disposition est avantageuse, car elle facilite l'écartement entre le premier logement 15 et le deuxième logement 16, ce qui permet l'assemblage de la batterie 4.

Comme il peut être observé sur les figures, la première languette 19 présente une première surface de liaison 25, longitudinale, et la troisième languette 21 comprend une deuxième surface de liaison 26, coplanaire de la première surface de liaison 25. De cette manière, les surfaces de liaison 25, 26 forment une surface d'appui pour permettre de recevoir le panneau photovoltaïque 3. L'affleurement des pièces de support 8, 9 par rapport à la paroi avant 6 en dehors du caisson 2 se limite aux languettes 19, 20, et 21 ; ce qui permet de soigner l'esthétique du dispositif occultant 1.

Avantageusement, les pièces de support 8, 9 intègrent chacune un logement 15, 16, de maintien de la batterie 4. Lorsque les pièces de support 8, 9 sont solidarisées au caisson 2, les logements 15, 16 s'étendent au sein du volume interne V. De la sorte, il est possible de minimiser les éléments s'étendant hors du volume interne V du caisson 2. Une telle disposition aboutit ainsi à soigner l'aspect esthétique du dispositif occultant 11, et limite son encombrement.

Dans les modes de réalisation représentés, les pièces de support 8, 9 comprennent une embase 27, ménagée entre le premier côté 17 et le deuxième côté 18. Lorsque les pièces de support 18, 19 sont solidarisées à la paroi avant 6, l'embase 27 est disposée dans l'espace situé au droit de l'ouverture 10, entre le premier côté 17 et le deuxième côté 18.

Avantageusement, l'embase 27 assure la liaison entre le logement 15, 16 et les languettes 19, 20, 21. L'embase 27assure la rigidité des pièces de support 8, 9. En outre, une telle embase 27 permet la préhension des pièces de support 8, 9 lors du montage des pièces support 8, 9 sur la paroi avant 6, en particulier lorsque la batterie 4 est disposée au sein des logements 15, 16.

Dans le deuxième mode de réalisation, l'embase 27 comprend une section de liaison 29, oblique, laquelle permet de déporter transversalement les logements 15, 16 vis-à-vis du plan formé par la paroi avant 6. De cette manière, les logements 15, 16 et la batterie 4 s'étendent intégralement dans le volume interne V.

Avantageusement, une section de liaison 29 inclut une nervure 28, permettant de renforcer la rigidité de la section de liaison 29.

Dans le premier mode de réalisation représentés, l'embase 27 comprend au moins une section de raccordement 30 permettant de définir les positions transversales des languettes 19, 20, 21.

Dans certains modes de réalisation, par exemple le deuxième mode de réalisation, l'embase 27 comprend une section de base 31 définissant un plan, ou une pluralité de plan s'étendant dans un plan longitudinal. Une telle section de base 31 permet de rigidifier les pièces de support 8, 9.

Avantageusement, les pièces de support 8, 9 comprennent un troisième côté 32 et un quatrième côté 33. Lorsqu'une pièce de support 8, 9 est solidarisée à la paroi avant 6, le troisième côté 32 est positionné à proximité du premier bord latéral 13 ou le deuxième bord latéral 14, selon qu'il s'agisse de la première pièce de support 8 ou de la deuxième pièce de support 9.

Avantageusement, les pièces de support 8, 9 comprennent une première surface de positionnement 34, une deuxième surface de positionnement 35, et une surface de guidage 36, toute les trois ménagées sur une zone d'arrêt 37, au voisinage du troisième côté 32.

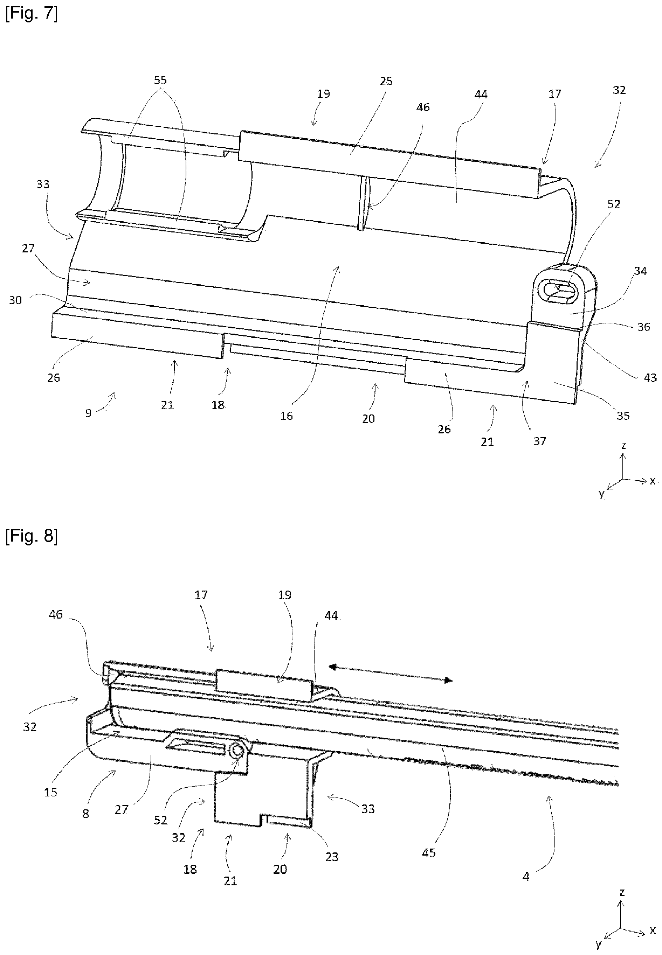

Comme illustré notamment sur la figure 7, dans le premier mode de réalisation, les surfaces de positionnement 34, 35 s'étendent toutes deux selon un plan longitudinal, la première surface de positionnement 34 étant décalée transversalement par rapport à la deuxième surface de positionnement 35, le décalage transversal étant de dimension voisine à l'épaisseur de la paroi avant 6.

Dans le premier mode de réalisation, la surface de guidage 36 relit la première surface de positionnement 34 à la deuxième surface de positionnement 35. La surface de guidage 36 s'étend parallèlement à un plan horizontal, permettant de former un plan pour réaliser un arrêt en translation de la pièce de support 8, 9 selon la direction verticale.

Avantageusement, la zone d'arrêt 37 se termine par une surface d'arrêt 43, qui s'étend dans un plan parallèle au plan transversal.

Avantageusement, et comme visible par exemple sur les figures 3 et 11, la paroi avant 6 comprend une zone d'appui 38, et une encoche 39.

Dans des modes de réalisation, la zone d'appui 38 et l'encoche 39 sont localisées sur un premier bord latéral 13, ou un deuxième bord latéral 14. Dans d'autres modes de réalisation, la zone d'appui 38 et l'encoche 39 sont localisées sur un premier bord longitudinal 11, ou un deuxième bord latéral 12. De la sorte, il est possible de former un arrêt pour la pièce de support 8, 9 en plusieurs localisation différentes.

Avantageusement, et comme visible sur la figure 3, une encoche 39 englobe par exemple une bordure 40, incluant une fraction horizontale 41 reliée à une fraction verticale 42.

Lorsque la pièce de support 8, 9 est positionnée contre un bord latéral 13, 14, la zone d'appui 38 est mise au contact de la première surface de positionnement 34, l'encoche 39 recevant la deuxième surface de positionnement 35, par exemple en positionnant la deuxième surface de positionnement 35 en butée contre la bordure 40.

Dans une telle configuration, la fraction horizontale 41 est en contact de la surface de guidage 36 et la fraction verticale 42 est en contact d'une surface d'arrêt 43. Une telle disposition permet de faciliter la solidarisation des pièces de support 8, 9, simplifiant le montage et démontage de la batterie 4.

L'on décrit à présent le premier logement 15 et le deuxième logement 16 en se référant plus particulièrement aux figures 6, 7, 14 et 15.

Dans les modes de réalisation représentés, le premier logement 15 est agencé sur la première pièce de support 8, tandis que le deuxième logement 16 est agencé sur la deuxième pièce de support 9.

Dans d'autres modes de réalisation non représentés, le premier logement 15 est agencé sur la deuxième pièce de support 9, tandis que le deuxième logement 16 est agencé sur la première pièce de support 8.

Avantageusement, la batterie 4 comprend une surface latérale intégrant une surface d'introduction 45 de forme complémentaire à une aile 44, permettant d'introduire la batterie 4 au sein du logement 15, 16.

Dans les modes de réalisation représentés, chaque logement 15, 16 inclut une aile 44 définissant une forme générale de portion de cylindre creux, ou de fût. L'aile 44 comprend une première rive 47 et une deuxième rive 48.

Dans le premier mode de réalisation, la première rive 47 de l'aile 44 du premier logement 15 est libre, tandis que la deuxième rive 48 est reliée à l'embase 27.

Dans le premier mode de réalisation, la première rive 47 et la deuxième rive 48 de l'aile 44 du deuxième logement 15 sont toutes les deux libres.

Comme il peut être constaté sur les figures, lorsque les pièces de support 8, 9 sont solidarisées à la paroi avant 6, les logements 15, 16 sont alignés selon une direction longitudinale, c'est-à-dire que les axes générant chacune des ailes 44 sont alignés.

Dans les modes de réalisation représentés, les ailes définissent chacun une portion de cylindre de révolution. Aussi, la batterie 4 s'insère de manière aisée au sein d'un logement 15, 16 grâce à la géométrie de portion de cylindre de révolution qui n'impose pas à l'utilisateur d'appliquer une rotation selon l'axe longitudinal pour aligner parfaitement la batterie 4 avec le logement 15, 16, cylindrique de révolution.

Dans des modes de réalisation non représentés, la batterie 4 présente une surface d'introduction 45 de section transversale polygonale, par exemple rectangulaire. Dans une telle configuration, l'aile 44 définit une portion de cylindre creux à section rectangulaire. Dans de tels modes de réalisation, la batterie 4 ne peut pas pivoter au sein des logements 8, 9.

Avantageusement, l'aile 44 du premier support 8 présente une dimension légèrement supérieure à la dimension de la surface d'introduction 45 de la batterie 4. De la sorte, il est laissé un jeu permettant une mise en place de la batterie 4 dans le premier logement 15 par simple insertion, le mouvement longitudinal de la batterie 4 étant alors possible.

Avantageusement, l'ensemble d'alimentation 100 comprend une paroi d'arrêt 46 s'étendant au sein de la cavité formée par l'aile 44. Un tel arrêt forme un arrêt en translation, empêchant la translation et la sortie de la batterie 4 en direction du premier bord latéral 14 ou du deuxième bord latéral 15, selon la localisation de la paroi d'arrêt 46.

Dans le premier mode de réalisation représenté, la paroi d'arrêt 46 est ménagée dans la première de support 8, et s'étend verticalement. La paroi d'arrêt 46 permet de constituer un support pour éviter par exemple lors du transport une sortie involontaire de la batterie par coulissement vers le premier bord latéral 14.

Dans le deuxième mode de réalisation représenté, la deuxième pièce de support comprend deux parois d'arrêt 46, ménagées verticalement, parallèlement l'une par rapport à l'autre. Les parois d'arrêt 46 comprennent chacune une pluralité de fente 56 ayant une dimension légèrement inférieure à la connectique, assurant un maintien de la connectique lorsqu'insérée dans les fentes. Une fente 56 forme un moyen de coincement, de maintien en place permettant de former un arrêt de la connectique.

Avantageusement, une fente 56 s'étend d'une extrémité de la paroi d'arrêt 46, permettant ainsi de glisser un fil électrique de la connectique verticalement. Une fente 56 exerce une pression sur le fil électrique une fois inséré, empêchant celui-ci de se déloger facilement, sous l'effet de mouvements.

Avantageusement, l'utilisation de deux parois d'arrêt 46 chacune munie de fentes 56 alignées permet d'avoir un coincement en deux localisations distinctes, ce qui permet de renforcer le maintien. Il est par ailleurs possible de laisser « du mou », afin d'éviter que la connectique ne soit trop tendue entre la batterie 4 et la fente 56.

Avantageusement, l'aile 44 du deuxième logement 16 est déformable, la distance entre la première rive 47 et la deuxième rive 48 étant variable en réaction à une poussée exercée lors de l'introduction d'une batterie 4 au sein du deuxième logement 16. Aussi, grâce à un tel deuxième logement 16, il est possible d'introduire la batterie 4 par encliquetage au sein du deuxième logement 16.

Avantageusement, la première rive 47 et la deuxième rive 48 du deuxième logement 16 comprennent chacune un bourrelet anti-retour 55, favorisant la solidarisation de la batterie 4 avec l'aile 44 du deuxième logement 16. Un tel bourrelet anti-retour 55 augmente l'adhérence entre la batterie 4 et l'aile 44, empêchant tout déplacement non voulu de la batterie 4, par exemple lors du transport du dispositif occultant 1.

Avantageusement, le deuxième logement 16 comprend une réservation 49, placée à proximité du troisième côté 32, permettant de laisser un passage suffisant pour placer des câbles et d'éventuelles nappes de câbles, ou faisceau de câbles. Ainsi, les câbles n'entravent pas la mise en place de la batterie 4.

Dans le premier mode de réalisation représenté, les logements 15, 16 sont en regard de l'ouverture 10, c'est-à-dire est en face de l'ouverture 10, dans une même position verticale. En d'autres termes, les logements 15, 16 sont visibles lorsqu'un observateur positionné sur un plan longitudinal fait face à l'ouverture 10. De la sorte, la batterie 4 est positionnée face à l'ouverture 10, permettant un accès aisé pour l'utilisateur, facilitant le remplacement de la batterie 4.

Dans le deuxième mode de réalisation représenté, les logements 15, 16 sont déportés, décalés verticalement par rapport à l'ouverture 10. En d'autres termes, les logements 15, 16 sont invisibles lorsqu'un observateur positionné sur un plan longitudinal fait face à l'ouverture 10, et sont cachés par la paroi avant 6. De la sorte, la batterie 4 est décalée par rapport à l'ouverture 10, et est positionnée au sein de l'espace interne V à proximité de la ligne de jonction J.

Communément aux modes de réalisation représentés, le panneau photovoltaïque 3 comprend des trous de positionnement 50, la paroi avant 6 intègre des perforations de positionnement 51, et les pièces de support 8, 9 comprennent chacune un orifice de positionnement 52, avantageusement pratiqué au sein de la zone d'arrêt 37.

L'ensemble d'alimentation 100 comprend avantageusement des moyens de fixation cylindriques 53, visibles par exemple sur la figure 5, chacun d'entre eux s'insérant et traversant successivement un trou de positionnement 50, un orifice de positionnement 52, et une perforation de positionnement 51. En d'autres termes, un trou de positionnement 50, un orifice de positionnement 52, et une perforation de positionnement 51 sont alignés.

Dans les modes de réalisation représentés, les moyens de fixation cylindriques 53 permettent notamment le maintien en position des pièces de support 8, 9 contre les bords latéraux 13, 14 de la paroi avant 6.

Dans les modes de réalisation représentés, les moyens de fixation cylindriques 53 permettent également d'assembler le panneau photovoltaïque 3 à la paroi avant 6.

Aussi, dans les modes de réalisation représentés, un même moyen de fixation cylindrique 53 permet d'assembler ensemble le panneau photovoltaïque 3, les pièces de support 8, 9 à la paroi avant 6. Une telle disposition facilite le montage et le démontage de l'ensemble d'alimentation, et l'accès à la batterie 4 puisqu'il suffit d'agir uniquement sur les moyens d'actionnement cylindrique pour accéder et remplacer la batterie 4.

Dans les modes de réalisation représentés, un moyen de fixation cylindrique 53 est une vis, par exemple en prise dans les orifices de positionnement 52. Les perforations de positionnement 51, et les trous de positionnement 50 présentent par exemple un diamètre supérieur à celui de la partie filetée de la vis.

Dans d'autres modes de réalisation non représentés, le moyen de fixation cylindrique 53 comprend une tige filetée munie d'un moyen d'actionnement manuel, par exemple une molette, permettant un actionnement manuel du moyen de fixation 53, et évitant l'usage d'un tournevis.

L'on décrit à présent un exemple de procédé de montage de la batterie 4 au sein d'un caisson 2.

Une première pièce de support 8 est disposée face à l'ouverture 10, le premier logement 15 tourné vers l'extérieur du caisson 2, c'est-à-dire à l'opposé du volume interne V.

La première pièce de support 8 est positionnée dans une position longitudinale située entre le premier bord latéral 13 et le deuxième bord latéral 14, mais plus proche du premier bord latéral 13 que le deuxième bord latéral 14.

La première pièce de support 8 est pivotée selon l'axe longitudinal dans un sens allant de l'axe Y vers l'axe Z. Dans une telle position, le premier plan de contact 22 est approché de la paroi avant 6, au niveau du premier bord longitudinal 11.

Lorsque le premier plan de contact 22 touche la paroi avant 6, la première pièce de support 8 est pivotée dans un sens allant de l'axe Z vers l'axe Y, ce qui permet de faire entrer en contact la deuxième languette 20 avec le deuxième bord longitudinal 12.

Ensuite, un effort de poussé est exercé visant à pousser la première pièce de support 8 vers le volume interne V, de manière à déformer élastiquement la deuxième languette 20, qui franchit alors la paroi avant 6, de sorte à se retrouver dans le volume interne V. La troisième languette 21 par l'intermédiaire du troisième plan de contact 24 est contre la paroi avant 6. La première pièce de support 8 peut coulisser au sein de l'ouverture 10.

Une deuxième pièce de support 9 est positionnée au sein de l'ouverture 10 de la même manière décrit ci-dessus pour la première pièce de support 8, *mutatis mutandis.* L'ensemble d'alimentation 100 est alors dans une configuration intermédiaire.

À partir d'une telle configuration, la première pièce de support 8 est poussée contre le premier bord latéral 13, la deuxième pièce de support 9 est poussée contre le deuxième bord latéral 14.

La batterie 4 est ensuite glissée dans le premier logement 15, puis enclipsée dans le deuxième logement 16 par pression vers le volume interne V. La batterie 4 est ensuite connectée au motoréducteur grâce à la connectique.

Dans une telle configuration, la batterie 4 peut être facilement retirée en tirant dessus, c'est-à-dire en exerçant une action de traction vers l'extérieur du volume interne. Une telle action permet d'extraire la batterie 4 du premier logement 15 et du deuxième logement 16, et de la sortir de l'ensemble d'alimentation 100.

Le panneau photovoltaïque 3 est connecté à la connectique, puis l'ensemble de la connectique est poussé dans la réservation 49 prévue à cet effet. Le panneau photovoltaïque 3 est positionné sur l'ouverture 10 et les trous de positionnement 50 sont mis face aux orifices de positionnement 51, tandis que des moyens de fixation solidarisent le panneau photovoltaïque 3 à la paroi avant 6.

Un tel procédé s'avère rapide à exécuter, simple et nécessite un outillage minimal. Le procédé ne nécessite pas le démontage de la face avant 6, évitant des manipulations trop contraignantes à l'utilisateur, ce qui permet de réduire le temps où ses bras sont au-dessus de ses épaules. Le risque d'apparition de TMS est par conséquent réduit.

L'ensemble 100 et le dispositif occultant 1 tels que décrits ci-dessus présentent les avantages suivants :
- facilité de maintenance de la batterie, ne nécessitant pas de qualification particulière, ni d'outil spécifique,
- possibilité de pré-monter la batterie sur la paroi avant 6 dès l'usine, la batterie 4 étant immobilisée au sein de son logement 15, 16 sans possibilité de déplacement et notamment de glissement longitudinal pendant son transport,
- coût de fabrication minimisé par la minimisation du nombre de pièce et les procédés mis en œuvre.

## Revendications

1. Ensemble d'alimentation (100) d'un dispositif occultant (1) à enroulement motorisé pour baie, l'ensemble d'alimentation (100) comprenant :
- une batterie (4) destinée à être connectée à un panneau photovoltaïque (3),
- un caisson (2) définissant un volume interne (V), le caisson (2) comprenant une paroi avant (6) munie d'une ouverture (10) destinée à être recouverte d'un panneau photovoltaïque (3),
- l'ouverture (10) intégrant des bords longitudinaux (11, 12), reliés entre eux par un premier bord latéral (13) et un deuxième bord latéral (14), l'ensemble d'alimentation (100) comprenant une première pièce de support (8) et une deuxième pièce de support (9), toutes deux destinées à être solidarisées à la paroi avant (6), en étant respectivement insérées puis positionnées par coulissement contre le premier bord latéral (13) et le deuxième bord latéral (14), les pièces de support (8, 9) incluant chacune un logement (15, 16) apte à permettre le maintien de la batterie (4), lorsque les pièces de support (8, 9) sont solidarisées à la paroi avant (6), les logements (15, 16) s'étendent tous deux au sein du volume interne (V).

2. Ensemble d'alimentation (100) selon la revendication précédente, **caractérisé en ce qu'**une pièce de support (8, 9) est dotée d'un premier côté (17) comprenant une première languette (19), et un deuxième côté (18) comprenant une deuxième languette (20) ainsi qu'une troisième languette (21), la première languette (19) intégrant un premier plan de contact (22) longitudinal, la deuxième languette (20) intégrant un deuxième plan de contact (23) longitudinal, la troisième languette (21) intégrant un troisième plan de contact (24) coplanaire du premier plan de contact (22), le deuxième plan de contact (23) et le troisième plan de contact (24) étant transversalement décalés l'un par rapport à l'autre, lorsque la pièce de support (8, 9) est solidarisée à la paroi avant (6), la paroi avant (6) s'intercalant entre le deuxième plan de contact (23) et le troisième plan de contact (24).

3. Ensemble d'alimentation (100) selon la revendication précédente, **caractérisé en ce que** la première languette (19) comprend une première surface de liaison (25) et la troisième languette (21) comprend une deuxième surface de liaison (26), les surfaces de liaison (25, 26) étant coplanaires et s'étendant selon un plan longitudinal, les surfaces de liaison (25, 26) formant un plan d'appui longitudinal permettant de recevoir le panneau photovoltaïque (3).

4. Ensemble d'alimentation (100) selon l'une quelconque des revendications précédentes, **caractérisé en ce que** la batterie (4) comprend une surface d'introduction (45) cylindrique, la première pièce (8) comprenant un premier logement (15), la deuxième pièce (9) comprenant un deuxième logement (16), les logements (15, 16) comprenant chacun une aile (44) définissant une portion de cylindre, lorsque la première pièce (8) et la deuxième pièce (9) sont solidarisées à la paroi avant (6), les ailes (44) sont alignées selon une direction longitudinale.

5. Ensemble d'alimentation (100) selon la revendication précédente, **caractérisé en ce qu'**une aile (44) comprend une première rive (47), et une deuxième rive (48), l'aile (44) étant suffisamment déformable de sorte à assurer une variation d'écartement entre la première rive (47) et la deuxième rive (48), en réaction à une poussée exercée lors de l'introduction de la batterie (4) au sein de la surface d'introduction (45), permettant l'enclipsage de la batterie (4) sur la pièce de support (8, 9).

6. Ensemble d'alimentation (100) selon l'une quelconque des revendications précédentes, **caractérisé en ce qu'**une pièce de support (8, 9) comprend une zone d'arrêt (37), la zone d'arrêt (37) englobant une surface de guidage (36) comprise dans un plan longitudinal, une première surface de positionnement (34), une deuxième surface de positionnement (35), les surfaces de positionnement (34, 35) s'étendent toutes deux selon un plan longitudinal, la première surface de positionnement (34) étant décalée transversalement par rapport à la deuxième surface de positionnement (35), un bord latéral (13, 14) incluant une face d'appui (38) configurée pour être mise au contact de la première surface de positionnement (34), et une encoche (39) configurée pour recevoir la deuxième surface de positionnement (35), la deuxième surface de positionnement (35) étant destinée à être en butée contre la bordure (40).

7. Ensemble d'alimentation (100) selon l'une quelconque des revendications précédentes, **caractérisé en ce qu'**un logement (15, 16) est doté d'une paroi d'arrêt (46) de sorte à constituer un arrêt en translation pour la batterie (4).

8. Ensemble d'alimentation (100) selon la revendication précédente, **caractérisé en ce qu'**il comprend une connectique destinée à relier la batterie (4) à un motoréducteur et à un panneau photovoltaïque (3), la paroi d'arrêt (46) comprenant au moins une fente (56) destinée à recevoir une connectique, la fente (56) formant un moyen de coincement pour la connectique.

9. Ensemble d'alimentation (100) selon l'une quelconque des revendications précédentes, **caractérisé en ce que** lorsque les pièces de support (8, 9) sont solidarisées à la paroi avant (6), les logements (15, 16) sont en regard de l'ouverture (10).

10. Ensemble d'alimentation (100) selon l'une quelconque des revendications 1 à 7, **caractérisé en ce que** lorsque les pièces de support (8, 9) sont solidarisées à la paroi avant (6), les logements présentent un décalage vertical par rapport à l'ouverture (10).

11. Ensemble d'alimentation (100) selon l'une quelconque des revendications précédentes, **caractérisé en ce que** le panneau photovoltaïque (3) comprend un trou de positionnement (50), la paroi avant (6) intègre une perforation de positionnement (51), et une pièce de support (8, 9) comprend un orifice de positionnement (52), lorsque la pièce de support (8, 9) est solidarisée à la paroi avant (6) et le panneau photovoltaïque (3) fixé sur la paroi avant (6), un même moyen de fixation mécanique (53) traverse successivement le trou de positionnement (50), la perforation de positionnement (51), et l'orifice de positionnement (52).

12. Dispositif occultant (1) à enroulement motorisé pour baie, le dispositif occultant (1) comprenant un élément occultant, un motoréducteur, un système de commande, et un ensemble d'alimentation (100) selon l'une quelconque des revendications précédentes.
